# EUROPÄISCHE PATENTANMELDUNG

(11) **EP 1 266 687 A1**
(43) Veröffentlichungstag der Anmeldung: **18.12.2002**
(21) Anmeldenummer: 01112536.6
(22) Anmeldetag: 23.05.2001
(51) Int. Cl.: B01J 23/42, B01J 23/46, H01M 4/92, H01M 8/10

(54) **Verfahren zur Herstellung eines Anodenkatalysators für PEM-Brennstoffzellen und damit hergestellter Anodenkatalysator**

(71) Anmelder: OMG AG & Co. KG, 63457 Hanau (DE)
(72) Erfinder: Ruth, Karsten, Dr., 63755 Alzenau (DE); Biberbach, Peter, 63517 Rodenbach (DE); Starz, Karl-Anton, Dr., 63517 Rodenbach (DE); McIntosh, Ralph, 63457 Hanau (DE)
(74) Vertreter: Stellbrink, Axel

(57) **Zusammenfassung**

Die Erfindung betrifft ein Verfahren zur Herstellung eines Platin-Ruthenium-Katalysators sowie den damit hergestellten Katalysator. Der Katalysator kann auf einem pulverförmigen Trägermaterial geträgert oder auch ungeträgert sein. Zur Herstellung des geträgerten Katalysators suspendiert man das Trägermaterial in Wasser und erwärmt die Suspension bis maximal zum Siedepunkt. Bei gleichbleibender Temperatur der Suspension werden dann Lösungen von Hexachloroplatinsäure und Rutheniumchlorid der Suspension zugeführt, anschließend der pH-Wert der Suspension durch Zugabe einer Lauge auf einen Wert zwischen 6,5 und 10 angehoben und dadurch die Edelmetalle auf dem Trägermaterial ausgefällt. Danach werden eine oder mehrere organische Carbonsäuren und/oder deren Salze zur Suspension zugegeben und der Katalysator chemisch reduziert, gewaschen, getrocknet und gegebenenfalls abschließend bei einer Temperatur zwischen 300 und 1000 °C unter inerter oder reduzierender Atmosphäre calciniert. Der Katalysator zeichnet sich in der Brennstoffzelle durch eine hohe Toleranz gegen Kohlenmonoxid-Vergiftung aus.

## Beschreibung

Die Erfindung betrifft einen Platinum-Ruthenium-Katalysator für PEM-Brennstoffzellen mit hoher Toleranz gegenüber Vergiftung durch Kohlenmonoxid. Der Katalysator ist besonders als Anodenkatalysator für Brennstoffzellen mit einer Polymerelektrolyt-Membran (PEM-Brennstoffzelle) aber auch als Anodenkatalysator für eine Direkt-Methanol-Brennstoffzelle (DMFC) geeignet.

Brennstoffzellen sind im Prinzip mit Gas betriebene Batterien, bei denen die aus der Reaktion von Wasserstoff und Sauerstoff gewonnene Energie direkt in elektrische Energie umgesetzt wird. Die vorliegende Erfindung beschreibt Katalysatoren für PEM-Brennstoffzellen (PEM = Polymerelektrolyt-Membran), die für den Betrieb mit wasserstoffhaltigen Gasen oder mit Methanol (DMFC=Direct Methanol Fuel Cell) geeignet sind. Erst genannter Brennstoffzellentyp gewinnt wegen seiner hohen Energiedichte und Robustheit zunehmende Bedeutung als Stromquelle für mit Elektromotoren betriebene Kraftfahrzeuge, letztgenannter Typ ermöglicht die Reduzierung der benötigten Aggregate, da eine wasserstofferzeugende Einheit nicht erforderlich ist.

Brennstoffzellen weisen im Vergleich zu konventionellen Verbrennungsmaschinen sehr niedrige Emissionen bei gleichzeitig sehr hohem Wirkungsgrad auf. Wird als Brenngas Wasserstoff verwendet, entsteht als einzige Emission Wasser auf der Kathodenseite der Zelle. Kraftfahrzeuge mit einem solchen Antrieb werden als ZEV (Zero Emission Vehicle) bezeichnet.

Wasserstoff ist jedoch zum gegenwärtigen Zeitpunkt noch zu teuer und bereitet Probleme bei der Speicherung und bei der Betankung von Fahrzeugen. Aus diesem Grunde gewinnt die Alternative, Wasserstoff direkt an Bord des Fahrzeuges aus Methanol zu gewinnen, zunehmend an Bedeutung. Das im Fahrzeugtank gespeicherte Methanol wird entweder in einer der Brennstoffzelle vorgeschalteten Einheit in ein wasserstoffreiches Brenngas mit Kohlendioxid und Kohlenmonoxid als Nebenbestandteile umgewandelt oder direkt auf der Anode der Brennstoffzelle oxidiert. Im erst genannten Fall werden Reinigungsstufen zur Umsetzung des Kohlenmonoxids durch Shift-Reaktion oder Preferential-Oxidation (PROX) zwischengeschaltet. Das Reformatgas besteht somit theoretisch lediglich aus ca. 75 Vol.-% Wasserstoff und 25 Vol.-% Kohlendioxid. In der Praxis enthält dieses Gas jedoch noch Stickstoff und, je nach Reinigungsgrad, wechselnde Mengen an Kohlenmonoxid (bis zu 1 Vol.-%). Beim DMFC-Betrieb wird das Methanol direkt an der Anode elektrochemisch zu Kohlendioxid oxidiert. Eine Zwischenstufe im komplizierten Reaktionsmechanismus der Anodenreaktion führt über adsorbiertes Kohlenmonoxid, das dann weiter zu Kohlendioxid oxidiert wird.

Als Katalysatoren auf der Anoden- und Kathodenseite der PEM-Brennstoffzelle werden Katalysatoren auf der Basis von Platin verwendet. Diese bestehen aus feinen Edelmetallpartikeln, die auf einem leitfähigen Trägermaterial (meist Ruß oder Graphit) abgeschieden sind. Der Gehalt an Edelmetall liegt zwischen 10 bis 80 Gew.-%, bezogen auf das Gesamtgewicht des Katalysators.

Herkömmliche Platinkatalysatoren sind gegen eine Vergiftung durch Kohlenmonoxid sehr empfindlich. Daher muß der Gehalt des Anodengases an Kohlenmonoxid auf unter 10 ppm abgesenkt werden, um Leistungseinbußen der Brennstoffzellen durch eine Vergiftung des Anodenkatalysators zu verhindern. Dies gilt insbesondere für die PEM-Brennstoffzelle, die mit ihren niedrigen Arbeitstemperaturen bis 100 °C besonders empfindlich gegen eine Vergiftung durch Kohlenmonoxid ist. Noch größere Probleme treten bei DMFC-Systemen auf.

Das Problem der Vergiftung von Platinkatalysatoren durch Kohlenmonoxid ist seit langem bekannt. Kohlenmonoxid wird aufgrund seiner speziellen Molekülstruktur an der Oberfläche des Platins adsorbiert und blockiert so den Zugang der Wasserstoffmoleküle des Anodengases zu den katalytisch aktiven Zentren des Platins.

Es ist auch bekannt, daß die Toleranz des Platinkatalysators gegenüber einer Vergiftung durch Kohlenmonoxid durch Legieren oder Dotieren des Platins mit anderen Metallen, zum Beispiel Ruthenium, verbessert werden kann. Dadurch wird in der Regel die Oxidation des am Pt adsorbierten Kohlenmonoxids zu Kohlendioxid erreicht, welches dann leicht desorbiert wird. Der Sauerstoff hierfür wird entweder in Form von geringen Mengen Luft (im folgenden Airbleed genannt) oder in gebundener Form als Wasser dem Anodengasstrom zugeführt. Die Verwendung des Airbleeds führt, neben der Oxidation des Kohlenmonoxids, zu einer teilweisen Oxidation des Wasserstoffs und senkt damit den Wirkungsgrad des Gesamtsystems. Aus diesen Gründen gewinnen Katalysatoren für Airbleed-reduzierte oder sogar Airbleed-freie Brennstoffzellensysteme zunehmend an Bedeutung.

In der EP 0889 188 A2 wird ein CO-toleranter PtRu-Anodenkatalysator beschrieben, bei dem die beiden Edelmetalle nicht miteinander legiert sind. Die Partikelgröße des Platins ist dabei kleiner 2 nm, die des Rutheniums kleiner 1 nm. Die hohe Kohlenmonoxid-Toleranz wird bei einem Airbleed von 3 Vol.% erreicht. Außerdem zeigt die Oberflächenanalyse mittels XPS, daß das Ruthenium in weitgehend oxidischer Form vorliegt.

DE 197 56 880 A1 beschreibt die Verwendung von Platin/Ruthenium-Legierungskatalysatoren, welche eine verringerte Partikelgröße gegenüber herkömmlichen Katalysatoren aufweisen und somit zu einer erhöhten Kohlenmonoxid-Toleranz führen. Jedoch wurde auch hierfür ein hoher Airbleed von 3 Vol.% verwendet. Über die Kohlenmonoxid-Toleranz bei verringertem Airbleed oder Airbleed-freiem Betrieb ist nichts bekannt. Zudem ist die Herstellung über die beschriebenen Kolloide aufwendig.

DE 44 43 701 C1 beschreibt die Verwendung ein- oder multimetallischer, geträgerter Katalysatoren. Auch in diesem Fall ist eine Herstellung über vorgefertigte Metallkolloide notwendig. Über die Verwendung als Anodenkatalysatoren ohne Airbleed ist nichts bekannt.

Die EP 0 501 930 B1 beschreibt quatemäre Legierungen aus Platin, Nickel, Kobalt und Mangan als Anodenkatalysator für Phosphorsäure-Brennstoffzellen (PAFC = Phosphoric Acid Fuel Cell), der eine gute Resistenz gegenüber Kohlenmonoxid bei den hohen Betriebstemperaturen einer Phosphorsäure-Brennstoffzelle von 160 bis 200°C besitzt. Die Legierungspartikel haben eine Größe von etwa 3 nm. Bei den hohen Betriebstemperaturen der Phosphorsäure-Brennstoffzelle ist allerdings die Neigung von Kohlenmonoxid auf Metalloberflächen zu adsorbieren von vornherein geringer als bei den niedrigen Betriebstemperaturen einer PEM-Brennstoffzelle.

Die EP 0 549 543 B1 beschreibt ein Verfahren zur Herstellung von Trägerkatalysatoren, welche hochdisperse Metallpartikel mit mittleren Partikelgrößen von unter 2 nm enthalten. Das Verfahren besteht darin, daß Metallionen in einer Suspension des Trägermaterials durch ein Reduktionsmittel in Gegenwart von Kohlenmonoxid reduziert und gleichzeitig auf dem Träger abgeschieden werden. Das anwesende Kohlenmonoxid wird an den sich abscheidenden Metallpartikeln adsorbiert und behindert somit das weitere Partikelwachstum. Nach erfolgter Abscheidung wird der Katalysator gewaschen und bei einer Temperatur unter 100°C in einer reduzierenden Atmosphäre getrocknet. Hierbei wird das Kohlenmonoxid desorbiert. In Beispiel 4 wird die Herstellung eines Platin/Ruthenium-Katalysators auf Kohlenstoff mit einer mittleren Partikelgröße der Platin/Ruthenium-Partikel von 1,7 nm beschrieben. Bei diesem Katalysator handelt es sich jedoch nicht um einen Legierungskatalysator, da die Adsorption des Kohlenmonoxids auf den Metallpartikeln während der Abscheidung die Ausbildung einer Legierung verhindert. Auch durch die nachfolgende Temperaturbehandlung bis 100°C wird keine Legierung gebildet. Über die Eigenschaften dieses Katalysators bei der Verwendung als Anodenkatalysator in einer PEM-Brennstoffzelle mit einem Kohlenmonoxid enthaltenden Reformatgas wird keine Aussage gemacht.

Seit einiger Zeit sind Platin/Ruthenium-Katalysatoren auf verschiedenen Trägermaterialien von der Firma E-TEK, Division of DeNora N.A. Inc., 39 Veronica Avenue, Somerset NJ 08873-6800 (USA) kommerziell erhältlich. Es handelt sich hierbei um legierte Platin/Ruthenium-Katalysatoren mit einer Edelmetallbeladung zwischen 5 und 60 Gew.-% und einem Platin/Ruthenium-Atomverhältnis von 1:1. Untersuchungen eines Katalysators dieses Typs (40 Gew.% PtRu auf Vulcan XC 72) ergaben eine unbefriedigende Toleranz gegenüber Kohlenmonoxid, insbesondere bei Konzentrationen von Kohlenmonoxid über 100 ppm im Anodengas. Wie die Oberflächenanalyse mittels XPS-Spektroskopie zeigt, weist der Katalysator erhebliche Anteile an oxidiertem Ruthenium an der Oberfläche auf.

Von M. Iwase und S. Kawatsu wird in einer Arbeit über die Entwicklung von Kohlenmonoxid-toleranten Anodenkatalysatoren berichtet (M. Iwase und S. Kawatsu, Electrochemical Society Proceedings, Volume 95-23, S. 12). In dieser Arbeit wurden die besten Ergebnisse mit einem Platin/Ruthenium-Legierungskatalysator erzielt, bei dem die Bildung der Legierung durch eine besondere Temperaturbehandlung erhalten wurde. Der Spannungsabfall bei einer Stromdichte von 0,4 A/cm² betrug bei einem Kohlenmonoxid-Gehalt von 100 ppm trotzdem noch ca. 200 mV. Dies ist für einen praktischen Betrieb allerdings noch zu hoch.

Ungeträgerte Platin/Ruthenium Katalysatoren als Kohlenmonoxid-tolerante Anodenkatalysatoren für schwefelsaure Brennstoffzellen werden von L.W. Niedrach et.al. (J. Electrochemical Techn. 5, 1967, S.318) beschrieben. Diese Materialien bestehen aus feinen Platin/Ruthenium-Legierungspulvern mit hohen spezifischen Oberflächen. Sie werden über den sog. ADAMS-Prozess durch Aufschmelzen einer Mischung von Hexachloroplatin(IV)säure, Ruthenium(III)chlorid und Natriumnitrat bei 500°C hergestellt. Diese Herstellmethode ist jedoch umwelt- und gesundheitsbedingt problematisch (Bildung großer Mengen von nitrosen Gasen, Arbeit mit flüssigen, korrosiven Salzschmelzen).

Aufgabe der vorliegenden Erfindung ist es daher, Platin-Ruthenium-Katalysatoren anzugeben, die sich durch eine verbesserte Toleranz gegenüber Katalysatorgiften wie Kohlenmonoxid im Anodengas auszeichnen, insbesondere bei geringem oder keinem Airbleed. Weiterhin soll der PtRu-Katalysator eine gute Leistung als Anodenkatalysator in der DMFC zeigen. Die erfindungsgemäßen Herstellverfahren sollen Umwelt und Gesundheit weniger stark gefährden als die bekannten Verfahren.

Für die erfindungsgemäße Herstellung eines auf einem pulverförmigen Trägermaterial geträgerten Platin-Ruthenium-Katalysators wird das Trägermaterial in Wasser suspendiert. Die Suspension wird dann unter ständigem Rühren auf 70 bis 90 °C erwärmt. Nach Erreichen der gewünschten Temperatur werden der Suspension wäßrige Lösungen von Hexachloroplatinsäure und Rutheniumchlorid zugeführt, deren Menge entsprechend der gewünschten Beladung des Trägermaterials mit den Edelmetallen bemessen wird. Anschließend wird der pH-Wert der Suspension zur Ausfällung von Hexachloroplatinsäure und Rutheniumchlorid in Form schwerlöslicher Edelmetallverbindungen durch Zugabe einer Lauge auf einen Wert zwischen 6,5 und 10 angehoben. Danach werden ein oder mehrere organische Carbonsäuren und/oder deren Salze zur Suspension zugegeben. Anschließend werden die ausgefällten Edelmetallverbindungen chemisch reduziert. Der so gebildete Katalysator wird chloridfrei gewaschen, getrocknet und gegebenenfalls abschließend bei einer Temperatur zwischen 300 und 1000 °C unter inerter oder reduzierender Atmosphäre calciniert.

Die Suspension aus Trägermaterial, Hexachloroplatinsäure und Rutheniumchlorid ist stark sauer. Durch Zugabe einer Lauge, bevorzugt Natronlauge, werden die Edelmetallverbindungen hydrolysiert und in Form schwerlöslicher, hydroxidischer Verbindungen ausgefällt und auf dem Trägermaterial abgeschieden. Durch Zugabe eines Reduktionsmittels wie zum Beispiel Formaldehyd oder Hydrazin werden die ausgefällten Edelmetallverbindungen chemisch reduziert.

Überraschenderweise hat sich gezeigt, daß die Qualität der Reduktion durch Zugabe ein oder mehrerer organischer Carbonsäuren und/oder deren Salze zur Suspension vor der Zugabe des Reduktionsmittels wesentlich verbessert wird. Es wird dadurch ein Katalysator erhalten, dessen Ruthenium-Anteil überwiegend im metallischen Zustand vorliegt. Durch seinen metallischen Zustand weist das Ruthenium eine höhere Aktivität für die Oxidation von Kohlenmonoxid auf - eine wesentliche Voraussetzung für eine hohe Toleranz gegenüber Kohlenmonoxid. Ohne Zugabe der organischen Carbonsäuren weist das Ruthenium im Katalysator nach Abschluß der Reduktion noch einen deutlich höheren Oxidationszustand auf.

Geeignete Carbonsäuren, die den beobachteten positiven Effekt ausüben, sind alle aliphatischen und aromatischen Carbonsäuren, beispielsweise Weinsäure, Phthalsäure, Essigsäure, Zitronensäure und andere. Es können auch deren Salze in Mischung mit den Säuren oder allein eingesetzt werden. Besonders geeignet sind die Alkali- und Erdalkalisalze der genannten Carbonsäuren.

Als Trägermaterial für den Katalysator werden bevorzugt Ruße, graphitierte Ruße, Graphite, Aktivkohlen oder leitfähige anorganische Oxide mit spezifischen Oberflächen (BET-Oberflächen, gemessen nach DIN 66132) von etwa 30 bis 1500 m²/g verwendet. Soll der Katalysator in Brennstoffzellen eingesetzt werden, so wird ein gut elektrisch leitfähiges Trägermaterial ausgewählt.

Nach der Reduktion wird der Katalysator abfiltriert, chloridfrei gewaschen und getrocknet. Für viele Anwendungsfälle kann er schon in diesem Zustand verwendet werden. Für den Einsatz des Katalysators als Anodenkatalysator für PEM-Brennstoffzellen hat es sich als vorteilhaft erwiesen, den Katalysator abschließend unter einer inerten oder reduzierenden Atmosphäre bei Temperaturen zwischen 300 und 1000 °C zu calcinieren.

Das beschriebene Verfahren kann in gleicher Weise auch ohne die Verwendung eines Trägermaterials durchgeführt werden (siehe Anspruch 8). Die Ausfällung der Edelmetallverbindungen erfolgt dann im Lösungsmittelvolumen und führt nach der Reduktion zu einem ungeträgerten pulverförmigen Katalysator, einem sogenannten Mohr. In diesem Fall wird keine abschließende Calcinierung vorgenommen.

Das erfindungsgemäße Verfahren zeichnet sich nicht nur dadurch aus, daß der damit erhaltene Katalysator besonders tolerant gegenüber Vergiftung durch Kohlenmonoxid ist, sondern es ist im Vergleich zu einigen aus dem Stand der Technik bekannten Verfahren (zum Beispiel dem Salzschmelzen-Verfahren nach ADAMS) wesentlich umweltfreundlicher.

Für eine gute Toleranz gegenüber einer Vergiftung durch Kohlenmonoxid sollte das Atomverhältnis von Platin zu Ruthenium im Katalysator zwischen den Werten 4:1 und 1:4, bevorzugt auf einen Wert von 1:1, eingestellt werden. Im Falle der geträgerten Variante kann der Anteil von Platin und Ruthenium, bezogen auf das Gesamtgewicht des Katalysators, zwischen 10 und 80 Gew.-% gewählt werden.

Weitere Untersuchungen des durch das Verfahren hergestellten Katalysators haben gezeigt, daß sich seine positiven, anwendungstechnischen Eigenschaften auch in seinen mikroskopischen Eigenschaften niederschlagen. Untersuchungen mit den Methoden der Photoelektronenspektroskopie (XPS) haben nämlich ergeben, daß das Ruthenium im Katalysator eine Bindungsenergie im Bereich von 280 bis 280,7 eV aufweist und somit überwiegend im metallischen Zustand vorliegt.

Die Photoelektronenspektroskopie (XPS/ESCA) ist ein oberflächensensitives Analyseverfahren. Die Auswertung der Spektren beruht auf dem DIN-Fachbericht No. 39, dem Report DMA(A)97 des National Physics Laboratory, Teddington, UK und den bisherigen Erkenntnissen des Arbeitsausschusses "Oberflächen- und Mikrobereichsanalysen NMP816 (DIN). Zur Untersuchung wird ein Gerät der Fa. Leybold, Typ LHS12 mit Energieanalysator EA11A verwendet.

Zur Bestimmung der Oberflächeneigenschaften des Platin-Ruthenium-Katalysators werden die Bindungsenergien (gemessen in Elektronenvolt, eV) des Rutheniums beobachtet, wobei der Ru 3d 5/2 - peak detektiert wird. Je niedriger der Oxidationsgrad, das heißt je metallischer das Ruthenium vorliegt, desto niedriger liegt der Wert für die Bindungsenergie. Allgemein gelten folgende Referenzdaten für den Ru 3d 5/2 - peak (siehe Practical Surface Ananlysis, Second Edition, Volume 1, Verlag John Wiley and Sons, New York, Seite 612):

| | | |
|---|---|---|
| Ru metallisch | (Oxidationsstufe 0) | 279,9 - 280,2 eV |
| Rutheniumdioxid | (Oxidationsstufe 4) | 280,9 eV |
| Rutheniumtrioxid | (Oxidationsstufe 6) | 282,5 eV |
| Rutheniumtetroxid | (Oxidationsstufe 8) | 283,3 eV |

Bei der Messung werden die Katalysatoren im Originalzustand sowie gegebenenfalls nach Abtragen der obersten Oberflächenatome durch Argonionen ("Sputtern") untersucht. Die Werte der Bindungsenergien der Signalmaxima werden in eV angegeben.

Es zeigte sich überraschenderweise, daß in den durch das erfindungsgemäße Verfahren hergestellten Platin-Ruthenium-Katalysatoren das Ruthenium in überwiegend metallischem Zustand vorliegt und eine Bindungsenergie, gemessen durch XPS, im Bereich von 280,0 bis 280,7 eV (Ru 3d 5/2-peak) aufweist. Entsprechende Angaben sind in den Beispielen angegeben.

Eine mögliche Erklärung für die positiven Eigenschaften der nach dem erfindungsgemäßen Verfahren hergestellten Katalysatoren könnte darin liegen, daß durch eine mögliche Pufferung des pH-Wertes während der Reduktion die Oberflächenzusammensetzung und/oder die Beschaffenheit der Metallpartikel beeinflusst wird.

Der erfindungsgemäße Katalysator wird bevorzugt als Anodenkatalysator für PEM-Brennstoffzellen eingesetzt. Er besitzt in dieser Anwendung eine hohe Toleranz gegenüber Kohlenmonoxid, insbesondere bei geringem oder keinem Airbleed im Anodengas.

Weiterhin kann er als Anodenkatalysator in geträgerter oder ungeträgerter Form in Direkt-Methanol-Brennstoffzellen (DMFC) verwendet werden.

Die Erfindung wird an Hand der folgenden Beispiele und Vergleichsbeispiele näher erläutert. Es zeigen
- **Figur 1:**: Elektrochemische Leistung des erfindungsgemäß hergestellten Katalysators nach Beispiel 1 im Vergleich zu einem herkömmlich hergestellten Katalysator nach Vergleichsbeispiel 1
- **Figur 2:**: Spannungsabfall durch Hinzufügen von 100 ppm Kohlenmonoxid in den Anodengasstrom für den erfindungsgemäß hergestellten Katalysator nach Beispiel 1 im Vergleich zu einem herkömmlich hergestellten Katalysator nach Vergleichsbeispiel 1

### Beispiel 1:

30 g Ruß (Vulcan XC 72) wurden in 1,5 1 vollentsalztem Wasser (VE-Wasser) 30 Minuten bei Raumtemperatur suspendiert. 52,7 g 25 %-ige Hexachloroplatin(IV)säure und 29,4 g 23,2 %-ige Ruthenium(III)chloridlösung wurden auf 300 ml mit vollentsalztem Wasser (VE-Wasser) verdünnt und zu der Suspension gegeben. Die Suspension wurde auf 80 °C erwärmt. Anschließend wurde der pH-Wert mit Natronlauge auf pH 7,0 angehoben.

Nach intensivem Rühren wurden 320ml di-Kaliumtartrat-Hemihydrat-Lösung (Fa. Merck, Darmstadt, Konzentration 0,1 mol/l) zur Suspension gegeben. Hierbei wurde der pH-Wert durch weitere Zugabe von Natronlauge konstant gehalten. Danach wurden 56 ml 24 %-ige Hydrazinlösung hinzugefügt und die Suspension weitergerührt. Dann wurde der Katalysator abfiltriert und bei erhöhter Temperatur getrocknet. Abschließend wurde der Katalysator unter Stickstoff bei 500 °C calciniert.

Der fertige Katalysator wies eine Edelmetallbeladung von 40 Gew.-%, bezogen auf sein Gesamtgewicht, und eine Atomverhältnis Pt/Ru von 1:1 auf. Die Charakterisierung des Katalysators mittels XRD und XPS ergab folgende Werte:

| | |
|---|---|
| Partikelgröße (XRD) nach Calcinierung | 5,7 nm |
| XPS-Bindungsenergie (Signal 3d 5/2) Originalzustand | 280,7 eV |

Das Ru liegt weitgehend im metallischen Zustand vor.

### Vergleichsbeispiel 1:

Beispiel 1 wurde wiederholt, jedoch wurde der Suspension diesmal vor der Reduktion keine Kaliumhydrogentartrat-Lösung zugegeben.

Die Charakterisierung des Katalysators mit XRD und XPS ergab folgende Werte:

| | |
|---|---|
| Partikelgröße (XRD): nach Calcinierung | 7,8 nm |
| XPS-Bindungsenergie (Signal 3d 5/2) Originalzustand | 281,3 eV |

Das Ru liegt somit in einem oxidischen Zustand vor (Oxidationsstufe > 4).

### Vergleichsbeispiel 2:

Es wurde ein käuflich erhältlicher Elektrokatalysator der Fa. der Firma E-TEK, Division of DeNora N.A. Inc., 39 Veronica Avenue, Somerset NJ 08873-6800 (USA) verwendet. Dieser Katalysator besteht nach Katalogangaben aus 40 Gew.-% Platin-Ruthenium auf Vulcan XC 72. Das Atomverhältnis Pt/Ru liegt bei 1:1.

Die XPS-Untersuchung lieferte folgende Ergebnisse:

| XPS-Bindungsenergie (Signal 3d 5/2) | |
|---|---|
| Originalzustand | 282,3 eV |
| Nach Sputtern | 282,3 eV |

Die Analyse zeigt, daß auf der Oberfläche sowie im Innern des Katalysators erhebliche Anteile an oxidischem Ruthenium (Oxidationsstufe ca. 6) vorliegen. Die CO-Toleranz dieses Katalysators ist dementsprechend vermindert.

### Beispiel 2:

Zur Herstellung eines Katalysators mit einer Edelmetallbeladung von 60 Gew.-% wurde Beispiel 1 wiederholt, jedoch wurden nur 13,3 g Ruß in Wasser suspendiert, um eine höhere Beladung zu erhalten.

Der fertige Katalysator wies eine Edelmetallbeladung von 60 Gew.-%, bezogen auf sein Gesamtgewicht, und eine Atomverhältnis Pt/Ru von 1:1 auf. Die Charakterisierung des Katalysators mit XRD und XPS ergab folgende Werte:

| | |
|---|---|
| Partikelgröße (XRD) nach Calcinierung: | 6,7 nm |
| XPS-Bindungsenergie (Signal 3d 5/2) | |
| Originalzustand | 280,2 eV |
| Nach Sputtern | 280,2 eV |

Das Ru liegt somit in einem metallischen Zustand vor.

### Beispiel 3:

Zur Herstellung eines ungeträgerten Platin-Ruthenium-Katalysators (Platin-Ruthenium-Mohr) wurde wie folgt vorgegangen:

52,7 g 25 %-ige Hexachloroplatin(IV)säure und 29,4 g 23,2 %-ige Ruthenium(III)-chloridlösung wurden in 1,8 1 vollentsalztes Wasser (VE-Wasser) gegeben und die Lösung auf 80 °C erwärmt. Anschließend wurde der pH-Wert mit Natronlauge auf pH 7,0 angehoben.

Nach intensivem Rühren für die Dauer von 1,5 Stunden wurden 320 ml di-Kaliumtartrat-Hemihydrat-Lösung (Fa. Merck, Darmstadt, Konzentration 0,1 mol/1) zugegeben. Hierbei wurde der pH-Wert durch weitere Zugabe von Natronlauge konstant gehalten. Danach wurden 56 ml 24 %-ige Hydrazinlösung hinzugefügt und die Suspension weiter gerührt. Anschließend wurde der Katalysator abfiltriert und bei erhöhter Temperatur getrocknet.

Die Charakterisierung des Katalysators mit XPS und XRD ergab folgende Werte:

| | |
|---|---|
| Partikelgröße (XRD): | 5,2 nm |
| XPS-Bindungsenergie (Signal 3d 5/2) | |
| Originalzustand | 280,4 eV |

Das Ru liegt somit weitgehend im metallischen Zustand vor.

### Anwendungsbeispiele:

Die Katalysatoren der vorangegangenen Beispiele wurden jeweils unter Verwendung einer Lösung von NAFION® zu einer Tinte verarbeitet und in dieser Form auf eine protonenleitende Membran aufgebracht. Die so hergestellte Membran-Elektroden-Einheit (MEE) wurde dann elektrochemisch vermessen. Die Gaszusammensetzung auf der Anodenseite war 25 Vol.% Kohlendioxid, 15 Vol.% Stickstoff und 60 Vol.% Wasserstoff. Als Kathodengas wurde Luft verwendet. Der Druck betrug 3 bar.

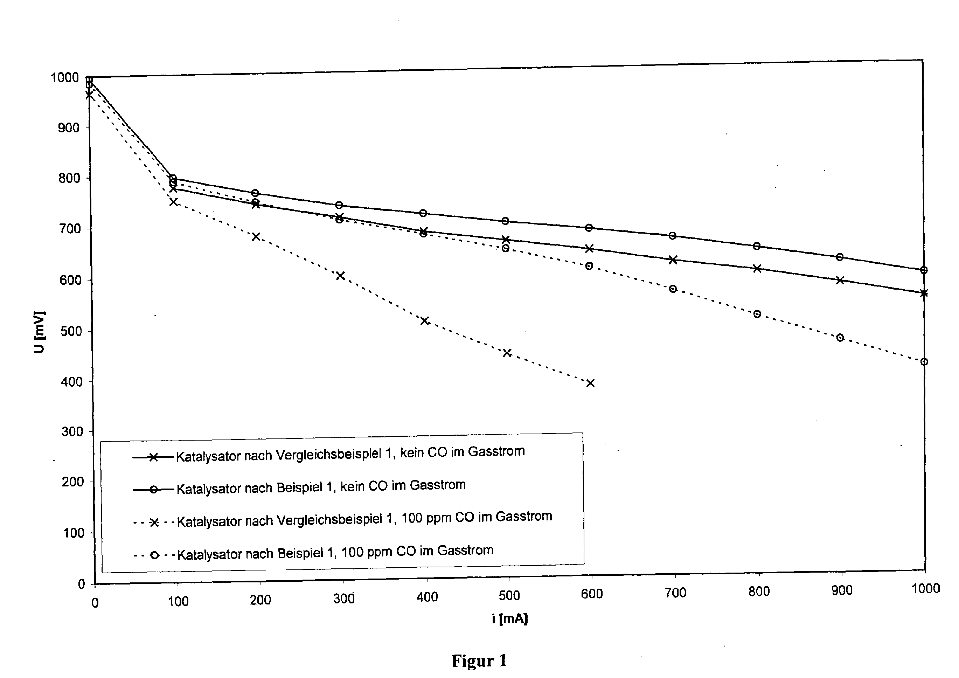

Figur 1 gibt die elektrochemische Leistung der Katalysatoren (Zellspannung U in Abhängigkeit von der Stromdichte i) von Beispiel 1 und Vergleichsbeispiel 1 an. Wie zu erkennen ist, wird mit dem erfindungsgemäß hergestellten Katalysator eine höhere Leistung erreicht. Dies gilt sowohl für die Leistung ohne Kohlenmonoxid im Anodengasstrom als auch für die Leistung bei kohlenmonoxidhaltigem Anodengas (100 ppm CO, ohne Airbleed).

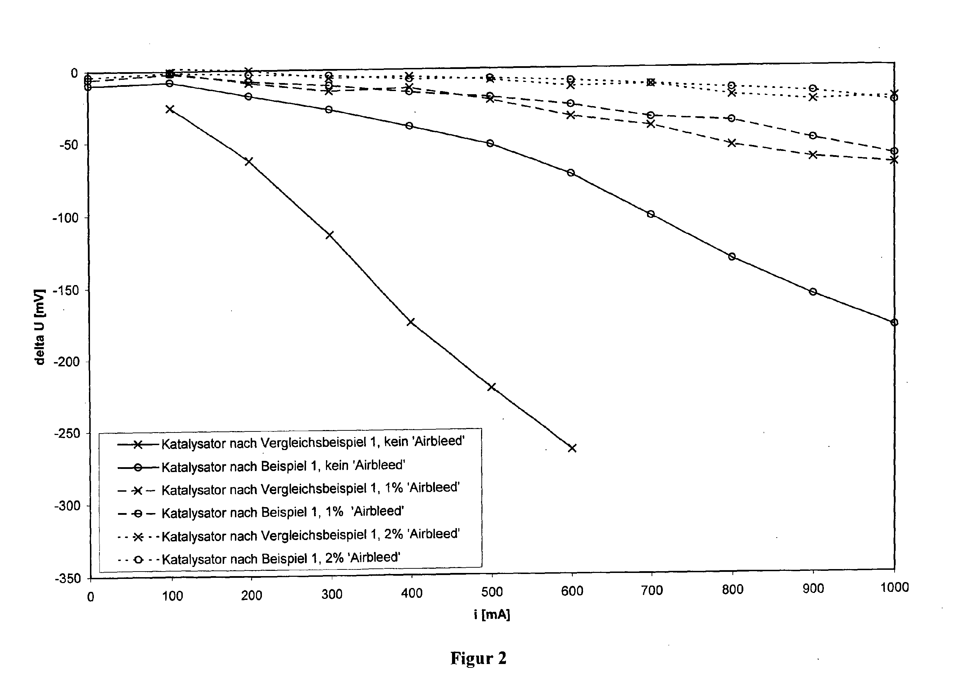

Figur 2 zeigt den Spannungsabfall ΔU für die Katalysatoren von Beispiel 1 und Vergleichsbeispiel 1 durch einen Kohlenmonoxidgehalt des Anodengases von 100 ppm gegenüber einem kohlenmonoxidfreien Anodengas bei verschiedenen Werten für den Airbleed. Hier zeigt sich die bessere Kohlenmonoxid-Toleranz des erfindungsgemäß hergestellten Katalysators im Vergleich zum konventionell hergestellten Katalysator. Dies wird insbesondere bei verringertem oder nicht vorhandenem Airbleed deutlich.

## Patentansprüche

1. Verfahren zur Herstellung eines auf einem pulverförmigen Trägermaterial geträgerten Platin-Ruthenium-Katalysators, wobei man das Trägermaterial in Wasser suspendiert, die Suspension unter ständigem Rühren bis maximal zum Siedepunkt erwärmt und dann bei gleichbleibender Temperatur und fortgesetztem Rühren Lösungen von Hexachloroplatinsäure und Rutheniumchlorid der Suspension zuführt, anschließend den pH-Wert der Suspension zur Ausfällung von Hexachloroplatinsäure und Rutheniumchlorid in Form schwerlöslicher Edelmetallverbindungen durch Zugabe einer Lauge auf einen Wert zwischen 6,5 und 10 anhebt, dann eine oder mehrere organische Carbonsäuren und/oder deren Salze zur Suspension zugibt, durch Zugabe eines Reduktionsmittels die ausgefällten Edelmetallverbindungen chemisch reduziert und den so gebildeten Katalysator wäscht, trocknet und gegebenenfalls abschließend bei einer Temperatur zwischen 300 und 1000 °C unter inerter oder reduzierender Atmosphäre calciniert.

2. Verfahren nach Anspruch 1,
**dadurch gekennzeichnet,**
**daß** als Trägermaterial Ruß, graphitierter Ruß, Graphit, Aktivkohle oder leitfähige anorganische Oxide verwendet werden.

3. Verfahren nach Anspruch 1,
**dadurch gekennzeichnet,**
**daß** der pH-Wert der Suspension mit Natronlauge angehoben wird.

4. Verfahren nach Anspruch 1,
**dadurch gekennzeichnet,**
**daß** als organische Carbonsäuren Weinsäure, Phthalsäure, Essigsäure, Zitronensäure und/oder deren Salze eingesetzt werden.

5. Verfahren nach Anspruch 1,
**dadurch gekennzeichnet,**
**daß** die chemische Reduktion durch Zugabe von Formaldhyd, Hydrazin, Natriumborhydrid oder vergleichbare Reduktionsmittel erfolgt.

6. Verfahren nach Anspruch 1,
**dadurch gekennzeichnet,**
**daß** der Anteil von Platin und Ruthenium, bezogen auf das Gesamtgewicht des Katalysators, zwischen 10 und 80 Gew.-% beträgt.

7. Verfahren nach Anspruch 1,
**dadurch gekennzeichnet,**
**daß** das Atomverhältnis von Platin zu Ruthenium auf einen Wert zwischen 4:1 und 1:4 eingestellt wird.

8. Verfahren zur Herstellung eines ungeträgerten Platin-Ruthenium-Katalysators (Platin-Ruthenium-Mohr),
**dadurch gekennzeichnet,**
**daß** man eine gemeinsame Lösung von Hexachloroplatinsäure und Rutheniumchlorid anfertigt, diese Lösung unter ständigem Rühren bis maximal zum Siedepunkt erwärmt und dann bei gleichbleibender Temperatur und fortgesetztem Rühren den pH-Wert der Lösung zur Ausfällung von Hexachloroplatinsäure und Rutheniumchlorid in Form schwerlöslicher Edelmetallverbindungen durch Zugabe einer Lauge auf einen Wert zwischen 6,5 und 10 anhebt, dann ein oder mehrere organische Carbonsäuren und/oder deren Salze zur Suspension zugibt und die ausgefällten Edelmetallverbindungen chemisch reduziert und den so gebildeten Katalysator wäscht und trocknet.

9. Platin-Ruthenium-Katalysator für Brennstoffzellen erhältlich durch ein Verfahren nach einem der Ansprüche 1 bis 8.

10. Platin-Ruthenium-Katalysator für Brennstoffzellen enthaltend feinverteilte Edelmetallpartikel,
**dadurch gekennzeichnet,**
**daß** das Ruthenium eine Bindungsenergie, gemessen durch Photoelektronenspektroskopie (XPS), im Bereich von 280 bis 280,7 eV (Ru 3d 5/2-peak) aufweist und somit überwiegend im metallischen Zustand vorliegt.

11. Katalysator nach Anspruch 10,
**dadurch gekennzeichnet,**
**daß** die feinverteilten Edelmetallpartikel auf einem pulverförmigen Trägermaterial aus der Gruppe der Ruße, graphitierten Ruße, Graphite, Aktivkohlen oder der leitfähigen anorganischen Oxide abgeschieden sind.

12. Katalysator nach Anspruch 10,
**dadurch gekennzeichnet,**
**daß** die feinverteilten Edelmetallpartikel in ungeträgertem Zustand vorliegen.

13. Katalysator nach den Ansprüchen 10 bis 12,
**dadurch gekennzeichnet,**
**daß** das Atomverhältnis von Platin zu Ruthenium zwischen 4:1 und 1:4 beträgt.

14. Verwendung des Katalysators nach einem der Ansprüche 10 bis 13 als Elektrokatalysator für PEM- und DMFC-Brennstoffzellen.

15. Membran-Elektroden-Einheit (MEE) für Brennstoffzellen,
**dadurch gekennzeichnet,**
**daß** sie den Katalysator nach den Ansprüchen 10 bis 13 enthält.
